# FASCICULE DE BREVET EUROPEEN

(11) **EP 0 967 129 B1**
(45) Date de publication et mention de la délivrance du brevet: **07.05.2003**
(21) Numéro de dépôt: 99112164.1
(22) Date de dépôt: 24.06.1999
(51) Int. Cl.: B60R 25/00

(54) **Ensemble haut de colonne avec antivol intégré**
Lenksäulenoberteil mit integrierter Anti-Diebstahlvorrichtung
Steering column top assembly with integrated anti-theft device

(30) Priorité: 26.06.1998 FR 9808130
(43) Date de publication de la demande: 29.12.1999
(73) Titulaire: Valeo Electronique, 94042 Créteil (FR)
(72) Inventeur: Lagier, Daniel, 92000 Nanterre (FR)
(74) Mandataire: Lemaire, Marc

(56) Documents cités:
- EP-A- 0 695 676
- EP-A- 0 731 005
- DE-A- 4 432 000
- FR-A- 2 376 015

## Description

L'invention concerne un ensemble haut de colonne de véhicule automobile destiné à être monté sur un tube de colonne de direction, du type comportant :
- un boîtier de support de commutateurs d'essuie vitre et d'éclairage contenant une carte électronique équipé d'un connecteur pour sa liaison au faisceau électrique du véhicule ;
- un antivol mécanique disposé dans un tube fourreau destiné à être solidarisé audit tube de colonne et comprenant un barillet susceptible d'être actionné par une clef introduite par la face supérieure dite "entrée de clef" dudit tube fourreau ;
- un interrupteur électrique rotatif à positions multiples équipant ledit antivol, ledit interrupteur comprenant notamment un curseur entraîné en rotation par le barillet et un ensemble contacteur fixe coopérant avec le curseur pour commander les phases de démarrage du moteur du véhicule.

Tous les dispositifs antivols connus et montés sur les véhicules automobiles comportent un interrupteur de mise en service et d'alimentation du démarrage du véhicule, positionné en extrémité inférieure de l'antivol mécanique, près du dispositif de verrouillage de la colonne de direction. L'état de la technique d'un tel antivol de direction et d'un tel interrupteur électrique est illustré par les documents FR 2 731 455 et FR 2 739 970.

Cette disposition nécessite que le faisceau électrique de l'interrupteur soit relié à un faisceau particulier du véhicule. Elle ne permet pas un montage rapide de l'ensemble haut de colonne sur le véhicule car il faut des manipulations pour la mise en place et le raccordement électrique de l'interrupteur de mise en service, et pour réaliser la protection électrique du raccordement.

L'invention s'est donné pour but de proposer un ensemble haut de colonne du type mentionné ci-dessus, qui simplifie l'assemblage du véhicule sur la ligne de montage du constructeur.

L'invention s'est également donné pour but de diminuer les coûts de production de l'ensemble, notamment en diminuant le nombre de pièces de l'interrupteur électrique.

L'invention atteint son but par le fait que l'interrupteur électrique est disposé sur la face "entrée de clef' du tube fourreau et comporte une capsule coiffant ledit tube fourreau, ladite capsule présentant sur sa face d'extrémité supérieure une platine annulaire intégrant sur sa face interne les plages de commutation de l'ensemble contacteur, lesdites plages de commutation faisant parties d'un réseau électrique surmoulé lors de la réalisation de ladite capsule, et étant susceptibles de coopérer avec le curseur disposé entre ladite platine et la face "entrée de clef" et relié au barillet par l'intermédiaire d'un moyeu, et par le fait que ledit réseau électrique est relié électriquement à la carte électronique.

Cette disposition permet la liaison électrique de l'interrupteur au faisceau électrique du véhicule par le connecteur équipant la carte électronique. Ceci simplifie l'assemblage et évite des erreurs de câblage.

Lorsque le véhicule est équipé d'un système d'identification et de reconnaissance mutuelle du type transpondeur, le mandrin de bobinage de l'antenne transpondeur est avantageusement intégré dans la platine par surmoulage, et ce mandrin est relié électriquement à la carte électronique.

De préférence un couvercle isolant recouvre la platine.

De manière avantageuse le réseau électrique est alimenté en courant de faible puissance.

Ainsi, pour résoudre les problèmes d'encombrement et d'assemblage et plus particulièrement lorsque les contacts électriques commutés par l'interrupteur d'antivol sont des faibles courants, on lie mécaniquement et électriquement l'ensemble antivol et le transpondeur directement à la carte électronique contenu dans le boîtier de support de commutateurs.

Selon un premier mode de réalisation, les connexions électriques entre les éléments électriques de la platine et la carte électronique sont réalisées par des parties du réseau électrique, surmoulées dans un module pliable solidaire du boîtier de support.

Selon un deuxième mode de réalisation, les connexions électriques entre les éléments électriques de la platine et la carte électronique sont réalisées par l'intermédiaire d'un connecteur intégré dans la capsule et coopérant avec un connecteur équipant un circuit imprimé souple contenu dans le boîtier de support.

D'autres avantages et caractéristiques de l'invention ressortiront à la lecture de la description suivante faite à titre d'exemple et en référence aux dessins annexés dans lesquels :
- la figure 1 est une vue de dessus d'un ensemble haut de colonne selon l'invention, selon un premier mode de réalisation des connexions de l'interrupteur électrique à la carte électronique, avant la mise en place de la capsule de l'interrupteur sur le tube fourreau de l'antivol ;
- la figure 2 est une vue de face dans l'axe de la colonne de direction, de l'ensemble haut de colonne de la figure 1 ;
- la figure 3 est une coupe selon un premier plan passant par l'axe de rotation du curseur de l'interrupteur électrique selon l'invention ;
- la figure 4 est une coupe selon un deuxième plan passant par l'axe de rotation du curseur de l'interrupteur électrique selon un premier mode de réalisation des connexions électriques à la carte électronique du boîtier haut de colonne ;
- la figure 5 est une coupe selon le deuxième plan de l'interrupteur électrique selon un deuxième mode de réalisation des connexions électriques ; et
- la figure 6 est une vue éclatée en perspective de l'interrupteur électrique selon le deuxième mode de réalisation représenté sur la figure 5.

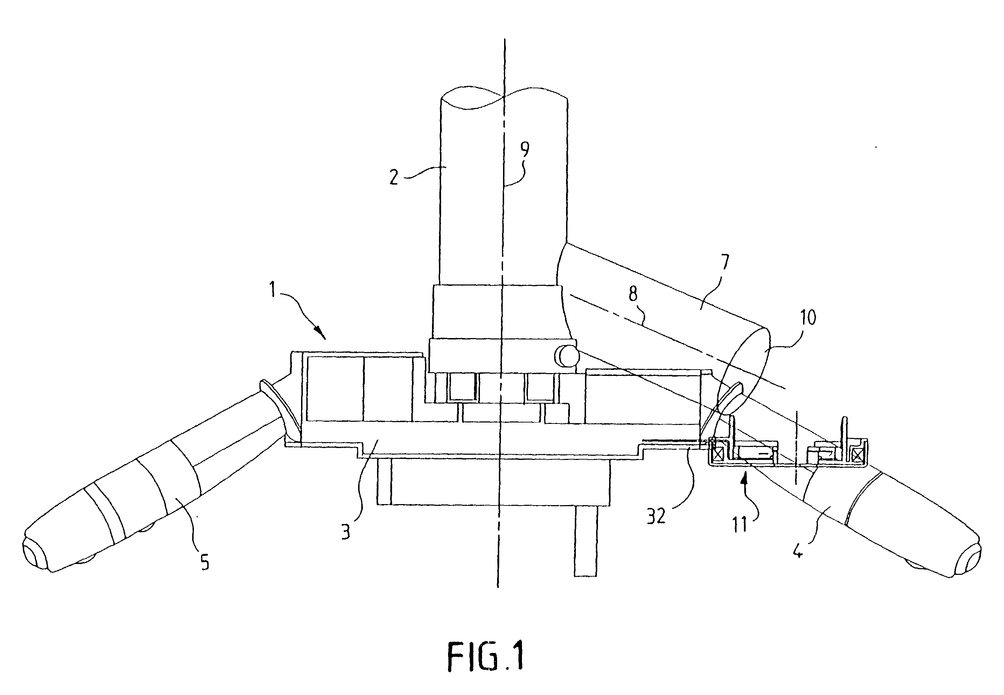

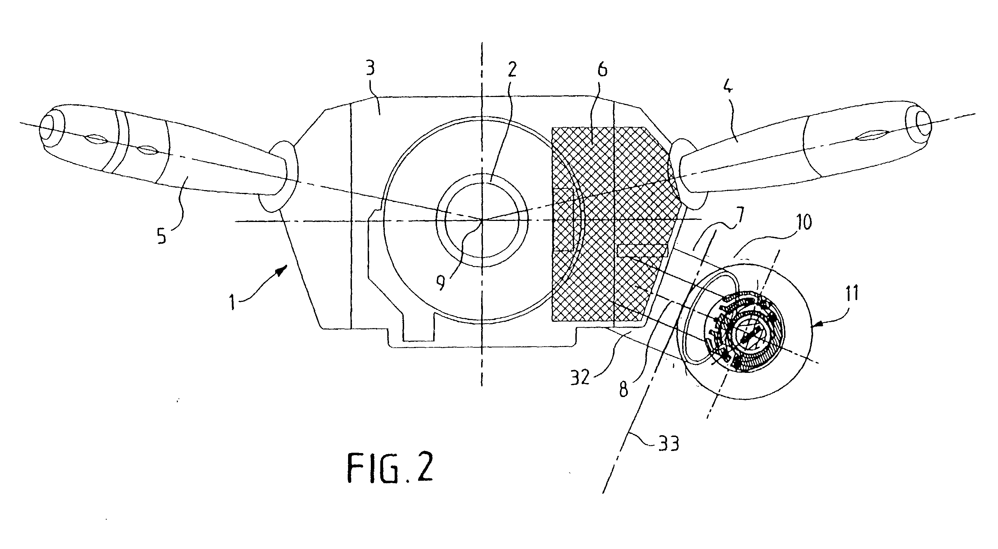

Les figures 1 et 2 montrent un ensemble haut de colonne 1 d'un véhicule, monté sur un tube 2 de colonne de direction.

Cet ensemble 1 comporte un boîtier de support 3 du commutateur d'essuie vitre 4 et du commutateur d'éclairage 5. Le boîtier de support 3 est solidaire du tube 2 de colonne de direction. Dans ce boîtier de support 3 est intégrée, de manière connue, une carte électronique 6 équipée d'un connecteur, non représenté sur les dessins, pour la liaison électrique de la carte électronique 6 au faisceau électrique du véhicule.

Sous le commutateur d'essuie vitre 4 est disposé un tube fourreau 7 solidaire du tube 2 de colonne de direction. Ce tube fourreau 7 a un axe 8 incliné par rapport à l'axe de rotation 9 de la colonne de direction. A l'intérieur du tube fourreau 7 est disposé un antivol mécanique comprenant un barillet susceptible d'être actionné par une clef introduite par la face supérieure ou avant, 10, dite "entrée de clef" du tube fourreau 7.

L'antivol permet de verrouiller ou déverrouiller la colonne de direction du véhicule par rotation de la clef, grâce à un pêne actionné par le mécanisme du barillet et qui est susceptible de traverser une lumière ménagée dans le tube de colonne de direction. La rotation de la clef permet également la mise en route ou l'arrêt du moteur du véhicule.

Selon la présente invention, l'interrupteur électrique 11 associé à l'antivol est disposé sur la face "entrée de clef" 10, et est relié électriquement à la carte électronique 6 du boîtier de support 3.

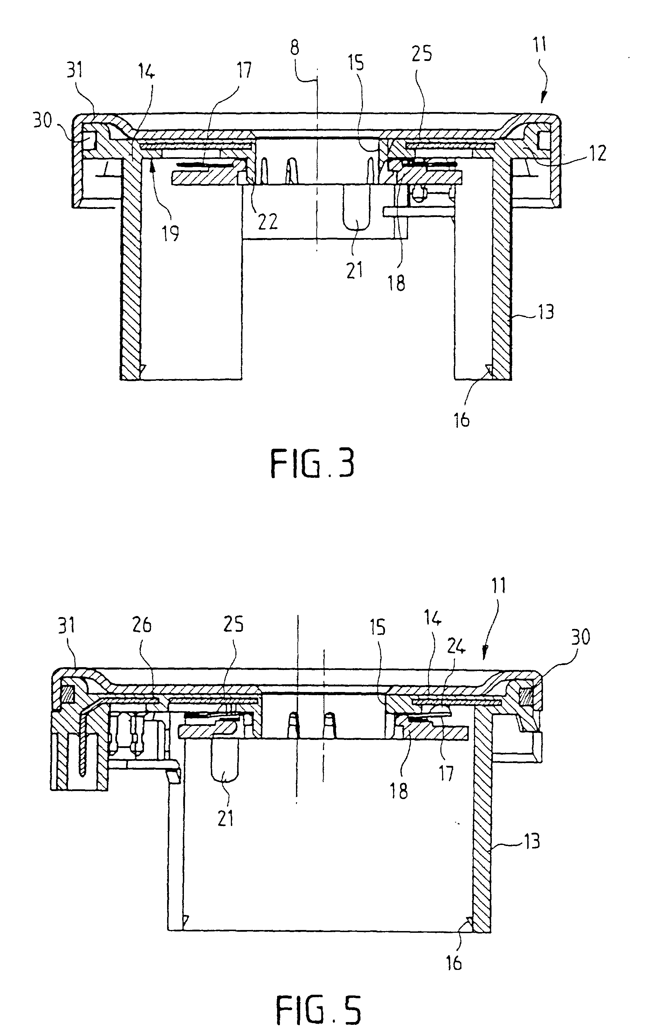

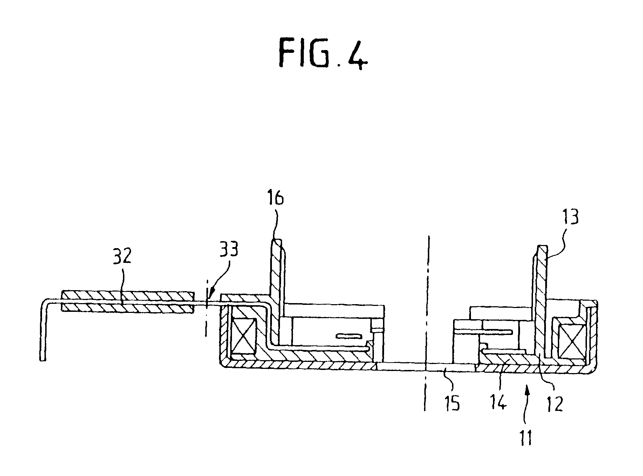

Cet interrupteur électrique 11, montré en détail sur les figures 3 à 6, comporte une capsule 12 susceptible de venir coiffer le tube fourreau 7. La capsule 12 est réalisée par moulage d'une matière isolante appropriée. Cette capsule 12 présente une jupe 13 qui s'étend sous une platine annulaire 14. La platine 14 comporte un orifice axial 15 pour le passage de la clef et la jupe comporte des moyens de fixation par clipsage 16 sur le tube fourreau 7.

Entre la face interne 19 de la platine 14 et la face "entrée de clef" 10 du tube fourreau 7, est prévu un curseur 17 positionné sur un moyeu 18, lui-même positionné sur la tête de barillet. Des encoches 20 et des protubérances 21 formées en correspondance sur ces trois pièces permettent le positionnement de ces trois pièces entre elles et la rotation du curseur 17 par le barillet actionné par la clef. La platine 14 présente, en outre, sur la face interne 19, un manchon 22 dans le prolongement de l'orifice 15. Ce manchon 22 traverse l'orifice axial 23 du moyen 18 et sert au guidage précis du moyen 18 lors de la rotation du barillet.

Le curseur 17 est réalisé en un matériau élastique conducteur d'électricité par estampage et il comporte des plots 24 destinés à coopérer avec un ensemble contacteur fixe 25 afin d'établir les liaisons électriques adéquates pour la commande des phases de démarrage ou d'arrêt du moteur, en fonction de la position angulaire de la clef : arrêt, alimentation des accessoires, alimentation de la bobine, alimentation du démarreur.

L'ensemble contacteur fixe 25 présente sur la face interne 19 de la platine 14 des plages de commutation qui font partie d'un réseau électrique 26 surmoulé lors de la réalisation de la capsule 12.

La référence 30 désigne un mandrin de bobinage d'une antenne de transpondeur qui est bobiné dans une gorge prévue à la périphérie de la platine 14, et la référence 31 désigne un couvercle isolant qui vient coiffer la platine 14. Le mandrin de bobinage 30 est également relié au réseau électrique 26.

Selon un premier mode de réalisation représenté sur les figures 1, 2 et 4, les connexions électriques entre les éléments électriques 25 et 30 de la platine 14 et la carte électronique 6 sont réalisées par des parties du réseau électrique 26 surmoulées en un module plat pliable 32 qui est solidarisé au boîtier de support 3, de préférence par surmoulage, et à la carte électronique 6 par une liaison électrique soudée ou par une connectique appropriée.

L'interrupteur électrique 11 est ainsi solidaire du boîtier de support 3. Lorsque le tube fourreau 7 et le boîtier de support 3 sont montés et positionnés sur le tube 2 de colonne de direction, il suffit de coiffer le tube fourreau 7 par la capsule 12 par pliage du module 32 selon l'axe 33 visible sur la figure 2. Après encliquetage de la jupe 13 sur le tube fourreau 7, le montage de l'ensemble haut de colonne 1 est terminé. Lors du montage de cet ensemble 1 sur le véhicule, il suffira d'établir la connexion entre le connecteur de la carte électronique et un connecteur du faisceau électrique du véhicule.

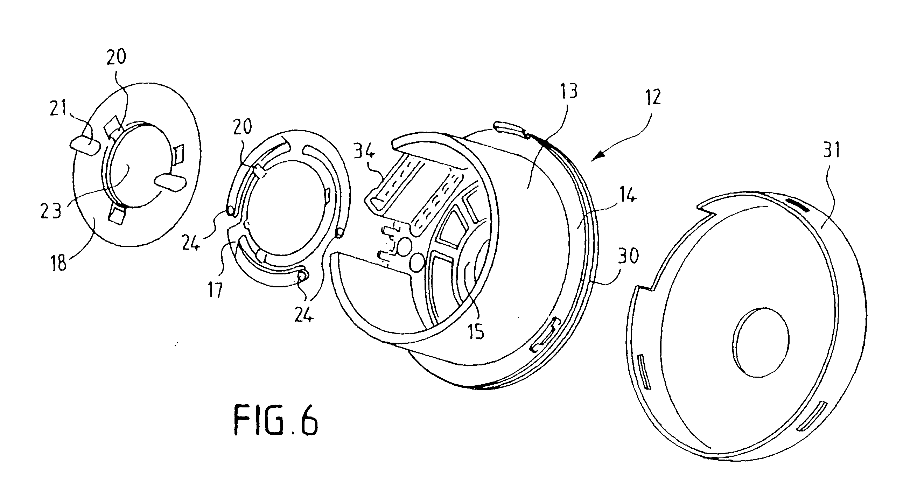

Selon un deuxième mode de réalisation montré sur les figures 5 et 6, la capsule 12 comporte un connecteur intégré 34 réalisé lors du moulage de la capsule 12 et dans lequel aboutissent les connexions du réseau électrique 26. Ce connecteur intégré 34 permet le raccordement électrique vers la carte électronique 6, réalisé, par exemple, par un circuit imprimé souple contenu dans le boîtier de support 3 des commutateurs 4 et 5, et équipé en son extrémité d'un connecteur adapté.

De préférence les contacts électriques commutés par l'interrupteur 11 sont parcourus par des courants électriques de faible puissance ou par des signaux faible courant.

Les signaux faible courant peuvent être traités soit par la carte électronique 6 soit par un boîtier de servitude. La fonction "deuxième coup de clef" qui interdit d'actionner le démarreur lorsque le moteur tourne est aujourd'hui réalisé mécaniquement. Grâce à l'interrupteur du type faible courant ou signaux proposés, cette fonction peut être électronisée.

La carte électronique 6 ou le boîtier de servitude devra ensuite commander les différentes actions de l'interrupteur électrique (11) et autoriser ou non le démarrage dans le cas d'une reconnaissance préliminaire par transpondeur.

## Revendications

1. Ensemble haut de colonne de véhicule automobile destiné à être monté sur un tube (2) de colonne de direction, du type comportant :
- un boîtier de support (3) de commutateurs (4, 5) d'essuie vitre et d'éclairage, contenant une carte électronique (6) équipée d'un connecteur pour sa liaison au faisceau électrique du véhicule ;
- un antivol mécanique disposé dans un tube fourreau (7) destiné à être solidarisé audit tube (2) de colonne et comprenant un barillet susceptible d'être actionné par une clef introduite par la face supérieur dite "entrée de clef" (10) dudit tube fourreau (7),
- un interrupteur électrique (11) rotatif à positions multiples équipant ledit antivol, ledit interrupteur (11) comprenant notamment un curseur (17) entraîné en rotation par le barillet et un ensemble contacteur (25) fixe coopérant avec le curseur (17) pour commander les phases de démarrage du moteur de véhicule,
**caractérisé par le fait que** l'interrupteur électrique (11) est disposé sur la face "entrée de clef" (10) du tube fourreau (7) et comporte une capsule (12) coiffant ledit tube fourreau (7), ladite capsule (12) présentant sur sa face d'extrémité supérieure une platine annulaire (14) intégrant sur sa face interne (19) les plages de commutation de l'ensemble contacteur (25), lesdites plages de commutation faisant parties d'un réseau électrique (26) surmoulé lors de la réalisation de ladite capsule (12), et étant susceptibles de coopérer avec le curseur (17) disposé entre la platine (14) et la face "entrée de clef" (10) et relié au barillet par l'intermédiaire d'un moyeu (18), et **par le fait que** ledit réseau électrique (26) est relié électriquement à la carte électronique (6).

2. Ensemble selon la revendication 1 **caractérisé par le fait que** la platine (14) comporte en outre un mandrin de bobinage (30) d'une antenne de transpondeur, ledit mandrin (30) étant relié électriquement à la carte électronique (6).

3. Ensemble selon l'une des revendications 1 ou 2 **caractérisé en ce qu'**un couvercle (31) isolant recouvre la platine (14).

4. Ensemble selon l'une quelconque des revendications 1 à 3 **caractérisé par le fait que** les connexions électriques entre les éléments électriques (25, 30) de la platine (14) et la carte électronique (6) sont réalisées par des parties du réseau électrique surmoulées dans un module (32) pliable solidaire du boîtier de support (3).

5. Ensemble selon l'une quelconque des revendications 1 à 3 **caractérisé par le fait que** les connexions électriques entre les éléments électriques (25, 30) de la platine (14) et la carte électronique (6) sont réalisés par l'intermédiaire d'un connecteur (34) intégré dans la capsule (12) et coopérant avec un connecteur équipant un circuit imprimé souple contenu dans le boîtier de support (3).

6. Ensemble selon l'une quelconque des revendications 1 à 3 **caractérisé par le fait que** le réseau électrique est alimenté en courant de faible puissance.

## Claims

1. Motor vehicle column top assembly intended to be mounted on a steering column tube (2), of the type comprising:
- a housing (3) supporting screen-wiper and lighting switches (4, 5), containing an electronic card (6) equipped with a connector for connecting to the vehicle electrical harness;
- a mechanical anti-theft device disposed in a sleeve tube (7) intended to be fixed to the said column tube (2) and comprising a barrel able to be actuated by a key introduced through the so-called "key entry" top face (10) of the said sleeve tube (7),
- a rotary electrical switch (11) with multiple positions equipping the said anti-theft device, the said switch comprising in particular a slider (17) driven in rotation by the barrel and a fixed contactor assembly (25) cooperating with the slider (17) in order to control the vehicle engine starting phases,
**characterised by** the fact that the electrical switch (11) is disposed on the "key entry" face (10) of the sleeve tube (7) and comprises a cap (12) covering the said sleeve tube (7), the said cap (12) having on its top end face an annular plate (14). integrating on its internal face (9) the switching areas of the contact assembly (25), the said switching areas forming parts of an electrical system (26) moulded on during the production of the said cap (12) and being able to cooperate with the slider (17) disposed between the plate (14) and the "key entry" face (10) and connected to the barrel by means of a hub (18), and by the fact that the said electrical system (26) is electrically connected to the electronic card (6).

2. Assembly according to Claim 1, **characterised by** the fact that the plate (14) also has a winding core (30) for a transponder antenna, the said core (30) being electrically connected to the electronic card (6).

3. Assembly according to one of Claims 1 or 2, **characterised in that** an insulating cover (31) covers the plate (14).

4. Assembly according to any one of Claims 1 to 3, **characterised by** the fact that the electrical connections between the electrical elements (25, 30) of the plate (14) and the electronic card (6) are made by parts of the electrical system moulded on in a foldable module (32) fixed to the support housing (3).

5. Assembly according to any one of Claims 1 to 3, **characterised by** the fact that the electrical connections between the electrical elements (25, 30) of the plate (14) and the electronic card (6) are made by means of a connector (34) integrated into the cap (12) and cooperating with a connector equipping a flexible printed circuit contained in the support housing (3).

6. Assembly according to any one of Claims 1 to 3, **characterised by** the fact that the electrical system is supplied with low-power current.

## Patentansprüche

1. Lenksäulenoberteil für Kraftfahrzeuge zum Montieren an einem Lenksäulenrohr (2), vom Typ mit:
- einem Traggehäuse (3) für Schalter (4, 5) von Scheibenwischer und Licht, mit einer elektronischen Karte (6), die zu deren Anschluss an den Kabelbaum des Fahrzeugs mit einem Verbinder versehen ist;
- einer mechanischen Diebstahlsicherung, die in einer Rohrhülse (7) angeordnet ist, welche zur festen Verbindung mit dem genannten Lenksäulenrohr (2) bestimmt ist und einen Schließzylinder enthält, der mit Hilfe eines über die obere, sogenannte Schlüsseleinführseite (10) der genannten Rohrhülse (7) eingeführten Schlüssels betätigbar ist,
- einem elektrischen Drehschalter (11), der mehrere Stellungen einnehmen kann und an der Diebstahlsicherung vorgesehen ist, wobei der genannte Schalter (11) insbesondere einen vom Schließzylinder drehend mitgenommenen Schieber (17) und eine feste Kontaktgebereinheit (25) enthält, die mit dem Schieber (17) zusammenwirkt, um die Startphasen des Fahrzeugmotors zu steuern;
**dadurch gekennzeichnet, dass** der elektrische Schalter (11) an der Schlüsseleinführseite (10) der Rohrhülse (7) angeordnet ist und eine Kappe (12) enthält, welche die genannte Rohrhülse (7) übergreift, wobei die Kappe (12) an ihrer endseitigen Oberseite eine Ringscheibe (14) aufweist, die an ihrer Innenseite (19) Schaltbereiche zum Schalten der Kontaktgebereinheit (25) einschließt, wobei die genannten Schaltbereiche Teil eines bei der Herstellung der genannten Kappe (12) eingegossen Stromnetzes (26) sind und mit dem Schieber (17) zusammenwirken können, der zwischen der Scheibe (14) und der Schlüsseleinführseite (10) angeordnet und mit dem Schließzylinder über eine Nabe (18) verbunden ist, und dass das genannte Stromnetz (26) elektrisch mit der elektronischen Karte (6) verbunden ist.

2. Teil nach Anspruch 1, **dadurch gekennzeichnet, dass** die Scheibe (14) ferner einen Wickeldorn (30) für eine Transponderantenne enthält, wobei der genannte Dorn (30) elektrisch mit der elektronischen Karte (6) verbunden ist.

3. Teil nach einem der Ansprüche 1 oder 2, **dadurch gekennzeichnet, dass** die Scheibe (14) von einem Isolierdeckel (31) überdeckt wird.

4. Teil nach einem der Ansprüche 1 bis 3, **dadurch gekennzeichnet, dass** die elektrischen Verbindungen zwischen den Elektroelementen (25, 30) der Scheibe (14) und der elektronischen Karte (6) aus Teilen des Stromnetzes realisiert sind, die in einen fest mit dem Traggehäuse (3) verbundenen, biegbaren Modul (32) eingegossen sind.

5. Teil nach einem der Ansprüche 1 bis 3, **dadurch gekennzeichnet, dass** die elektrischen Verbindungen zwischen den Elektroelementen (25, 30) der Scheibe (14) und der elektronischen Karte (6) mittels eines Verbinders (34) erfolgen, der in der Kappe (12) integriert ist und mit dem Verbinder zusammenwirkt, mit dem eine im Traggehäuse (3) enthaltene, nachgiebige gedruckte Schaltung versehen ist.

6. Teil nach einem der Ansprüche 1 bis 3, **dadurch gekennzeichnet, dass** das Stromnetz mit Strom geringer Leistung gespeist wird.
